# EUROPÄISCHE PATENTANMELDUNG

(11) **EP 3 312 712 A1**
(43) Veröffentlichungstag der Anmeldung: **25.04.2018**
(21) Anmeldenummer: 17187396.1
(22) Anmeldetag: 23.08.2017
(51) Int. Cl.: G06F 3/0488

(54) **LICHTSTELLPULT MIT DREHREGLER**

(30) Priorität: 21.10.2016 DE 202016105915 U
(71) Anmelder: MA Lighting Technology GmbH, 97297 Waldbüttelbrunn (DE)
(72) Erfinder: CORDES, Hartmut, 28355 Bremen (DE); ADENAU, Michael, 97082 Würzburg (DE)
(74) Vertreter: advotec.

(57) **Zusammenfassung**

Die Erfindung betrifft ein Lichtstellpult (01) zur Steuerung einer Beleuchtungsanlage, wobei im Lichtstellpult (01) digitale Stellbefehle erzeugt werden, die über Datenverbindungen an die Beleuchtungseinrichtungen der Beleuchtungsanlage übertragen werden können, wobei das Lichtstellpult zumindest einen Digitalprozessor und zumindest einen Digitalspeicher zur Erzeugung, Verwaltung und Speicherung der Stellbefehle umfasst, und wobei der Digitalprozessor und der Digitalspeicher in einem Konsolengehäuse (02) angeordnet sind, und wobei das Lichtstellpult (01) zumindest einen Drehregler (10) umfasst, an dem vom Benutzer durch Drehen eines Drehknopfs (09) Bedienbefehle eingegeben werden können, wobei am Drehregler (10) eine Berührungssensorik vorgesehen ist, mit der die Anzahl der am Drehknopf (09) anliegenden Finger (12, 13, 14, 15) des Benutzers detektierbar ist, wobei die am Drehregler (10) eingegebenen Bedienbefehle in Abhängigkeit von der Anzahl der am Drehknopf (09) anliegenden Finger (12, 13, 14, 15) verändert werden.

## Beschreibung

Die Erfindung betrifft ein Lichtstellpult mit einem Konsolengehäuse und einem daran befestigten Drehregler nach dem Oberbegriff des Anspruchs 1.

Gattungsgemäße Lichtstellpulte dienen zur Steuerung von Beleuchtungsanlagen, wie sie beispielsweise bei Konzertbühnen oder in Theatern zum Einsatz kommen. Diese Beleuchtungsanlagen umfassen regelmäßig eine Vielzahl von Beleuchtungseinrichtungen, beispielsweise Bühnenscheinwerfer, wobei die Beleuchtungseinrichtungen vielfach und auch für sich genommen zwischen einer Vielzahl von Beleuchtungszuständen, beispielsweise unterschiedlichen Farben, umgestellt werden können. Diese unterschiedlichen Beleuchtungszustände der jeweils an das Lichtstellpult angeschlossenen Beleuchtungseinrichtungen können durch programmierte Parameter im Beleuchtungsprogramm des Lichtstellpults gesteuert werden. Übliche Beleuchtungsanlagen können dabei bis zu mehreren tausend Beleuchtungseinrichtungen umfassen. Um derart komplexe Beleuchtungsanlagen steuern zu können, sind die gattungsgemäßen Lichtstellpulte mit einem Digitalprozessor ausgestattet, der eine digitale Daten- und Signalverarbeitung erlaubt. Zur Speicherung der Steuerdaten ist regelmäßig ein Digitalspeicher vorgesehen, der es insbesondere ermöglicht, Beleuchtungsprogramme zu speichern bzw. zu archivieren. Zum Schutz der elektrischen und elektronischen Bauteile des Lichtstellpults sind die entsprechenden Komponenten in einem Konsolengehäuse eingebaut, das die elektrischen und elektronischen Komponenten des Lichtstellpults nach außen hin abschirmt.

Zur Programmierung des Beleuchtungsprogramms bzw. zur Steuerung des Beleuchtungsprogramms während eines Programmablaufs müssen vom Bediener Bedienbefehle als Eingabewerte eingegeben werden. Dabei kann es sich beispielsweise um die Auswahl einer bestimmten Beleuchtungseinrichtung bzw. um die Einstellung eines bestimmten Parameters handeln. Für die Eingabe dieser Bedienbefehle sind an bekannten Lichtstellpulten mechanische Bedienelemente, wie Taster, Drehregler (Encoder) oder Schieberegler vorhanden, die an der Oberseite des Konsolengehäuses in einem Bedienfeld angeordnet sind. Die den einzelnen Bedienelementen zugeordneten Bedienbefehle können dabei durch geeignete Menüumschaltungen verändert werden, um entsprechend komplexe Beleuchtungsprogramme programmieren und steuern zu können.

Insbesondere die Drehregler oder Encoder sind bei der Programmierung der Beleuchtungsprogramme von großer Bedeutung. Die Drehregler umfassen dabei einen drehbaren Bedienknopf, der an der Oberseite des Lichtstellpults im Bedienfeld angeordnet ist und vom Benutzer zur Einstellung bestimmter Programmierparameter um eine Drehachse verschwenkt bzw. verdreht werden kann.

Bei der Eingabe von Bedienbefehlen am Drehregler ist es häufig notwendig zunächst eine Grobeinstellung und dann eine Feineinstellung vorzunehmen. In manchen Fällen ist es außerdem zusätzlich erforderlich eine Ultrafeinverstellung vornehmen zu können. Um diese Programmieraufgabe mit einem Drehregler lösen zu können, muss der Bediener bei bekannten Lichtstellpulten zwischen verschiedenen Eingabemodi für die Grobeinstellung, Feineinstellung und Ultrafeineinstellung umstellen, was einer intuitiven Bedienung des Lichtstellpults während der Programmierung entgegensteht.

Aufgabe der vorliegenden Erfindung ist es deshalb, ein neues Lichtstellpult mit Drehregler vorzuschlagen, welches die intuitive Bedienbarkeit des Lichtstellpults verbessert.

Diese Aufgabe wird durch ein Lichtstellpult nach der Lehre des Anspruchs 1 gelöst.

Vorteilhafte Ausführungsformen der Erfindung sind Gegenstand der Unteransprüche.

Das erfindungsgemäße Lichtstellpult beruht auf dem Grundgedanken, dass der Drehregler mit einer Berührungssensorik ausgestattet ist, mit der die Anzahl der am Drehknopf anliegenden Finger des Benutzers detektierbar sind. Durch die Auswertung der Anzahl der am Drehknopf anliegenden Finger ist es möglich, dass die am Drehregler eingegebenen Bedienbefehle in Abhängigkeit von der Anzahl der am Drehknopf anliegenden Finger von der entsprechenden Steuerung des Lichtstellpults verändert werden. Insbesondere ist es möglich, dass abhängig von der Anzahl der am Drehknopf des Drehreglers anliegenden Finger zwischen einer Grobverstellung, einer Feinverstellung und einer Ultrafeinverstellung umgeschaltet wird. Während der Steuerung bzw. Programmierung des Lichtstellpults hat der Benutzer also die Möglichkeit durch Änderung der Lage seiner Finger gegenüber dem Drehknopf zwischen Grobeinstellung, Feineinstellung und Ultrafeineinstellung umzuschalten. Legt der Benutzer beispielsweise den Zeigefinger, den Mittelfinger und den Ringfinger auf den Drehknopf, so kann dies von der Steuerung des Lichtstellpults dahingehend interpretiert werden, dass der Benutzer den entsprechenden Parameter mit einer Grobeinstellung schnell verstellen möchte. Nimmt der Benutzer dann den Ringfinger vom Drehknopf herunter und nimmt die Verstellung nur noch mit Zeigefinger und Mittelfinger vor, so kann dies als Feinverstellung von der Steuerung interpretiert werden. Liegt zuletzt nur noch der Zeigefinger auf dem Drehknopf auf, so kann dies als Ultrafeinverstellung von der Steuerung interpretiert werden. Eine eigene Umschaltung des Benutzers zwischen den verschiedenen Einstellungsmodi (Grobeinstellung, Feineinstellung, Ultrafeineinstellung) entfällt auf diese Weise und wird durch die Anzahl der vom Benutzer auf den Drehknopf aufgelegten Finger ersetzt.

In welcher Bauart der Drehregler des Lichtstellpults ausgebildet ist, ist grundsätzlich beliebig. Es kann sich dabei um einen mechanischen Encoder handeln, dessen Drehknopf auf einer Achse gelagert ist und über die Oberseite des Konsolengehäuses übersteht. Alternativ dazu ist es besonders preisgünstig das Lichtstellpult mit dem erfindungsgemäßen Drehregler dadurch zu realisieren, dass der Drehknopf des Drehreglers als Bildsymbol an einem Touchscreen angezeigt wird. Auf diese Weise kann die Berührungssensorik, mit der die Anzahl der an dem Drehknopf anliegenden Finger detektiert wird, in einfacher Weise durch die Bewegungssensorik des Touchscreens realisiert werden.

Soweit der Drehregler durch Einblendung entsprechender Bildsignale an einem Touchscreen realisiert wird, ist es besonders vorteilhaft, wenn der am Touchscreen eingeblendete Drehknopf des Drehreglers erst dann von der Steuerung zu Eingaben aktiviert wird, wenn das Anliegen zumindest einer Fingerkuppe am Drehknopf detektiert wurde. Auf diese Weise können Fehleingaben durch ungewollte Berührung des am Touchscreen eingeblendeten Drehknopfs vermieden werden. Beispielsweise ist es denkbar, dass der Benutzer zunächst jeweils in der Mitte des Drehknopfs, beispielsweise mit der Fingerkuppe des Daumens, den dort eingeblendeten Drehknopf berühren muss, um die Eingabe von Daten zu aktivieren. Erst nach dem Anliegen der Daumenkuppe an der Mitte des Drehknopfs kann dann eine Verstellung des Drehknopfs durch entsprechende Stellbewegungen des Zeigefingers und/oder des Mittelfingers und/oder des Ringfingers und/oder des Kleinfingers vorgenommen werden.

In welcher Weise die am Drehregler eingegebenen Bedienbefehle in Abhängigkeit von der Anzahl der am Drehknopf anliegenden Finger verändert werden, ist grundsätzlich beliebig. Besonders einfach kann dies dadurch geschehen, dass die am Drehregler eingegebenen Bedienbefehle von der Steuerung mit einem aus der Anzahl der am Drehknopf anliegenden Finger abgeleiteten Multiplikationsfaktor multipliziert werden. Je nach vorgegebenem Multiplikationsfaktor kann dadurch eine Grobeinstellung, Feineinstellung und/oder Ultrafeineinstellung realisiert werden.

Um die Art der Modifikation der Eingaben in Abhängigkeit von der Anzahl der am Drehknopf anliegenden Finger durch den Benutzer optimieren zu können, ist es besonders vorteilhaft, wenn der Multiplikationsfaktor in der Steuerung einstellbar ist. Auf diese Weise hat der Benutzer die Möglichkeit die Unterschiede zwischen Grobeinstellung, Feineinstellung und Ultrafeineinstellung auf seine individuellen Bedürfnisse abzustimmen.

Bei einer Ultrafeineinstellung kann der Multiplikationsfaktor bevorzugt dem Einfachen der Anzahl der am Drehknopf anliegenden Finger entsprechen. Zur Realisation einer Feineinstellung kann der Multiplikationsfaktor dem Zehnfachen der Anzahl der am Drehknopf anliegenden Finger entsprechen.

Zur Realisation einer Grobeinstellung kann der Multiplikationsfaktor dem Hundertfachen der Anzahl der am Drehknopf anliegenden Finger entsprechen.

Soweit das Anliegen einer Fingerkuppe, beispielsweise der Daumenkuppe, von der Steuerung als Aktivierungssignal zur Aktivierung von Eingaben an den Drehknopf interpretiert wird, sind die Multiplikationsfaktoren zur Grobeinstellung, Feineinstellung und Ultrafeineinstellung um die entsprechende Anzahl von anliegenden Fingern multipliziert mit dem entsprechenden Multiplikationsfaktor zu reduzieren. Das heißt bei der Ultrafeineinstellung entspricht der Multiplikationsfaktor dem Einfachen der Anzahl der am Drehknopf anliegenden Finger minus eins.

Bei der Feineinstellung entspricht der Mulitplikationsfaktor dem Zehnfachen der Anzahl der am Drehknopf anliegenden Finger minus zehn.

Bei der Grobeinstellung entspricht der Multiplikationsfaktor dem Hundertfachen der Anzahl der am Drehknopf anliegenden Finger minus hundert.

Eine Ausführungsform der Erfindung ist in den Zeichnungen schematisch dargestellt und wird nachfolgend beispielhaft erläutert.

Es zeigen:
- **Fig. 1**: ein Lichtstellpult zur Steuerung einer Beleuchtungsanlage mit mehreren Drehreglern in Ansicht von oben;
- **Fig. 2**: einen Touchscreen des Lichtstellpults gemäß Fig. 1 mit dem daran als Bildsymbol eingeblendeten Drehknopf eines Drehreglers;
- **Fig. 3**: den Touchscreen gemäß Fig. 2 in schematisierter Schnittansicht entlang der Schnittlinie I-I während der Grobeinstellung des Drehreglers;
- **Fig. 4**: den Touchscreen gemäß Fig. 3 während der Feineinstellung;
- **Fig. 5**: den Touchscreen gemäß Fig. 4 während der Ultrafeineinstellung.

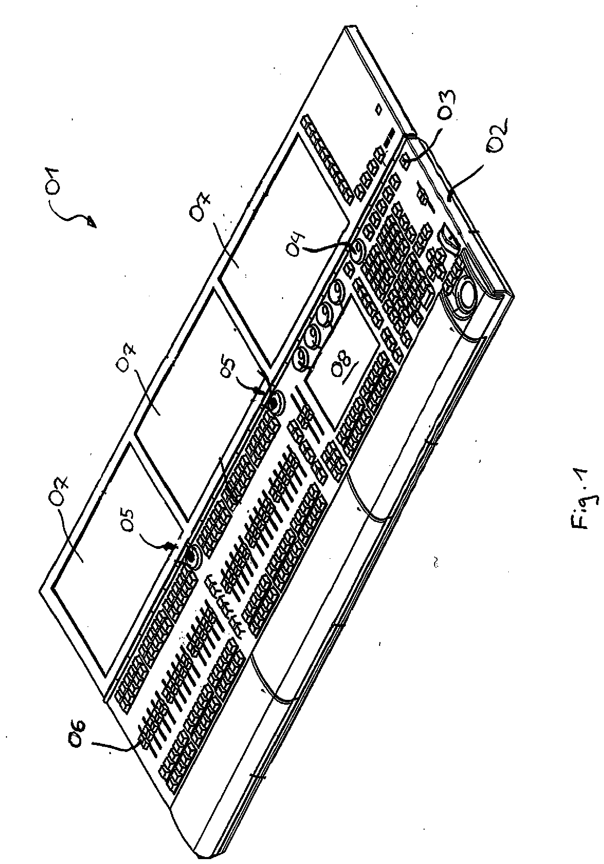

**Fig. 1** zeigt ein Lichtstellpult 01 zur Steuerung einer ansonsten nicht dargestellten Beleuchtungsanlage von oben. Zur Eingabe von Bedienbefehlen des Benutzers bei der Programmierung von Beleuchtungsprogrammen sind in das Konsolengehäuse 02 eine Vielzahl von mechanischen Bedienelementen wie Taster 03, Drehregler 04, Doppelwellenencoder 05 und Schieberegler 06 eingebaut. Außerdem umfasst das Lichtstellpult 01 zwei Touchscreens 07 und 08, an deren Bildschirm Bildinhalte angezeigt werden können und die mit einer Berührungssensorik ausgestattet sind, um Berührungen des Benutzers mit seinen Finger detektieren zu können.

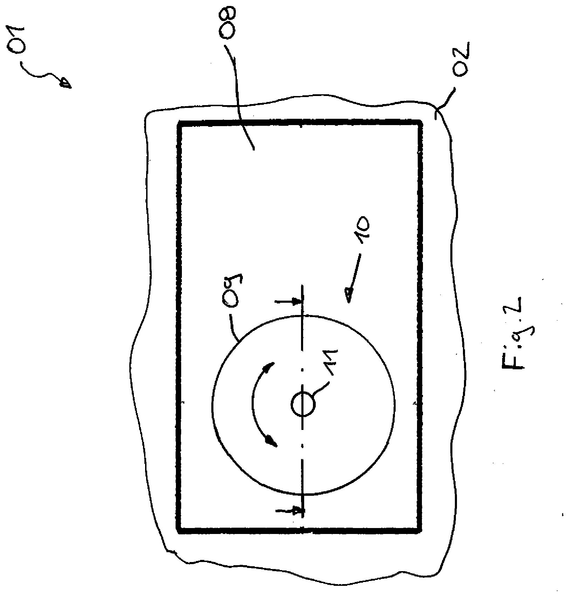

Fig. 2 zeigt den Touchscreen 08 des Lichtstellpults 01 in einem vergrößerten Ausschnitt. In dem in Fig. 2 dargestellten Betriebszustand ist am Touchscreen 08 der Drehknopf 09 eines symbolisch am Touchscreen 08 dargestellten Drehreglers 10 angezeigt. Der Drehknopf 09 kann vom Benutzer durch entsprechende Wischbewegungen an der Bildschirmoberfläche des Touchscreens 08 rotatorisch bewegt werden, um dadurch Stellbefehle am Lichtstellpult 01 einzugeben. In der Mitte des Drehknopfs 09 befindet sich ein Aktivierungsschalter 11. Erst wenn der Benutzer den Drehknopf 09 mit einer Fingerkuppe, beispielsweise der Daumenkuppe, im Bereich des Aktivierungsknopfs 11 berührt, können Eingabebefehle durch Verdrehen des Drehknopfs 09 mittels entsprechender Wischbewegungen der Finger der anderen Finger der Benutzerhand eingegeben werden.

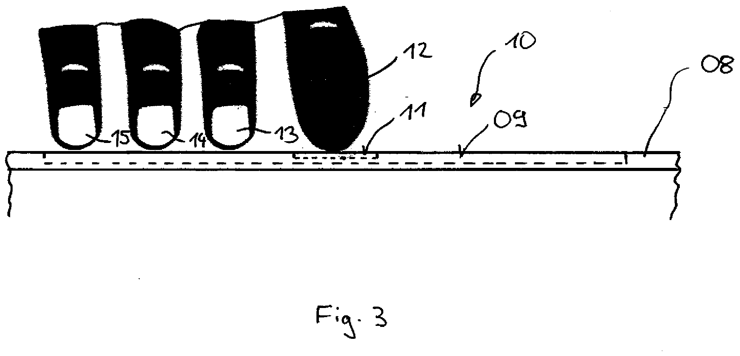

**Fig. 3** zeigt den Touchscreen 08 bei der Eingabe einer Grobeinstellung für einen bestimmten Beleuchtungsparameter in einer schematisierten seitlichen Ansicht. Dabei sind der Drehknopf 09 und der Aktivierungsschalter 11 lediglich symbolisch angedeutet, da diese Bedienelemente am Touchscreen 08 als Bildinhalte angezeigt werden. Sobald der Aktivierungsknopf 11 vom Daumen 12 des Benutzers berührt wird, können Bedienbefehle am Drehknopf 09 eingegeben werden. Berührt nun der Benutzer den Drehknopf 09 gleichzeitig mit drei weiteren Finger, nämlich den Finger des Zeigefingers 13, des Mittelfingers 14 und des Ringfingers 15, so wird diese Berührung des Touchscreens mit drei weiteren Fingern neben der Daumenkuppe dahingehend interpretiert, dass der Benutzer eine Grobeinstellung vornehmen möchte. Die durch Wischbewegungen der drei Finger 13, 14 und 15 eingegebenen Drehbewegungen des Drehknopfs 09 werden deshalb mit dem Faktor 30 (drei Finger mal dem Faktor 10 für die Grobeinstellung) multipliziert.

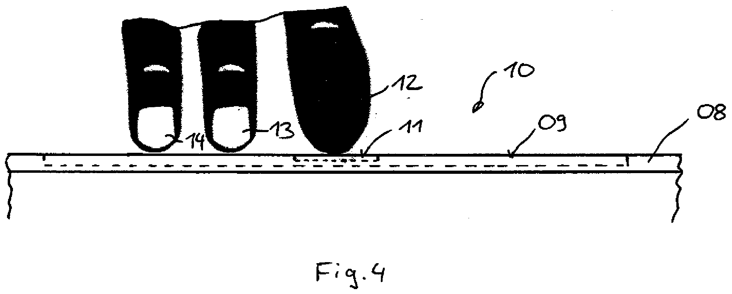

**Fig. 4** zeigt den Touchscreen 08 während einer Feineinstellung. Im Unterschied zu der Darstellung gemäß Fig. 3 berührt der Benutzer den Drehknopf 09 weiterhin mit dem Daumen 12 im Bereich des Aktivierungsknopfes 11. Der Drehknopf 09 selbst wird vom Benutzer nur noch mit dem Zeigefinger 13 und dem Mittelfinger 14 berührt. Diese Berührung an zwei Berührpunkten außerhalb des Aktivierungsknopfes 11 wird von der Steuerung dahingehend interpretiert, dass die Wischbewegungen der Finger 13 und 14 und die daraus resultierende Verdrehung des Drehknopfs 09 mit dem Faktor 20 multipliziert wird.

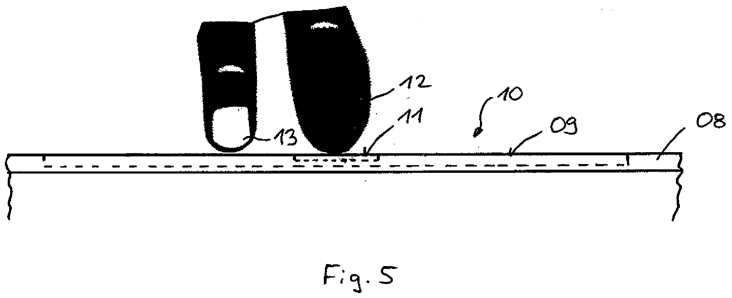

**Fig. 5** zeigt den Touchscreen 08 während der Ultrafeineinstellung eines Beleuchtungsparameters. Für die Ultrafeineinstellung aktiviert der Benutzer den Drehknopf 09 durch Berührung des Aktivierungsknopfes 11 mit dem Daumen 12 und bewegt mit Wischbewegungen nur noch den Zeigefinger 13 über die Berührfläche des Drehknopfs 09. Die entsprechenden Stellbewegungen des Drehknopfs 09 werden dann nur noch mit dem Faktor 10 multipliziert.

## Patentansprüche

1. Lichtstellpult (01) zur Steuerung einer Beleuchtungsanlage, wobei im Lichtstellpult (01) digitale Stellbefehle erzeugt werden, die über Datenverbindungen an die Beleuchtungseinrichtungen der Beleuchtungsanlage übertragen werden können, wobei das Lichtstellpult zumindest einen Digitalprozessor und zumindest einen Digitalspeicher zur Erzeugung, Verwaltung und Speicherung der Stellbefehle umfasst, und wobei der Digitalprozessor und der Digitalspeicher in einem Konsolengehäuse (02) angeordnet sind, und wobei das Lichtstellpult (01) zumindest einen Drehregler (10) umfasst, an dem vom Benutzer durch Drehen eines Drehknopfs (09) Bedienbefehle eingegeben werden können,
**dadurch gekennzeichnet,**
**dass** am Drehregler (10) eine Berührungssensorik vorgesehen ist, mit der die Anzahl der am Drehknopf (09) anliegenden Finger (12, 13, 14, 15) des Benutzers detektierbar ist, wobei die am Drehregler (10) eingegebenen Bedienbefehle in Abhängigkeit von der Anzahl der am Drehknopf (09) anliegenden Finger (12, 13, 14, 15) verändert werden.

2. Lichtstellpult nach Anspruch 1,
**dadurch gekennzeichnet,**
**dass** der Drehknopf (09) als Bildsymbol an einem Touchscreen (08) angezeigt wird, wobei die Berührungssensorik von der Sensorik des Touchscreens (08) im Bereich des Bildsymbols des Drehknopfs (09) gebildet ist.

3. Lichtstellpult nach Anspruch 2,
**dadurch gekennzeichnet,**
**dass** der am Touchscreen (08) eingeblendete Drehknopf (09) des Drehreglers (10) von einer Steuerung für Eingaben aktiviert wird, wenn am Drehknopf (09) ein Finger (12) anliegt.

4. Lichtstellpult nach Anspruch 3,
**dadurch gekennzeichnet,**
**dass** der am Touchscreen (08) eingeblendete Drehknopf (09) des Drehreglers (10) von einer Steuerung für Eingaben aktiviert wird, wenn ein Finger (12) in der Mitte des Drehknopfs (09), insbesondere im Bereich eines eingeblendeten Aktivierungsknopfes (11), anliegt.

5. Lichtstellpult nach einem der Ansprüche 1 bis 4,
**dadurch gekennzeichnet,**
**dass** die am Drehregler (10) eingegebenen Bedienbefehle von der Steuerung mit einem aus der Anzahl der am Drehknopf (09) anliegenden Finger (12, 13, 14, 15) abgeleiteten Multiplikationsfaktor multipliziert werden.

6. Lichtstellpult nach Anspruch 5,
**dadurch gekennzeichnet,**
**dass** der Multiplikationsfaktor in der Steuerung einstellbar ist.

7. Lichtstellpult nach einem der Ansprüche 1 bis 6,
**dadurch gekennzeichnet,**
**dass** der Multiplikationsfaktor dem Einfachen der Anzahl der am Drehknopf anliegenden Finger (12, 13, 14, 15) entspricht.

8. Lichtstellpult nach einem der Ansprüche 1 bis 6,
**dadurch gekennzeichnet,**
**dass** der Multiplikationsfaktor dem Zehnfachen der Anzahl der am Drehknopf anliegenden Finger (12, 13, 14, 15) entspricht.

9. Lichtstellpult nach einem der Ansprüche 1 bis 6,
**dadurch gekennzeichnet,**
**dass** der Multiplikationsfaktor dem Hundertfachen der Anzahl der am Drehknopf anliegenden Finger (12, 13, 14, 15) entspricht.

10. Lichtstellpult nach einem der Ansprüche 1 bis 6,
**dadurch gekennzeichnet,**
**dass** der Multiplikationsfaktor dem Einfachen der Anzahl der am Drehknopf anliegenden Finger (12, 13, 14, 15) minus eins entspricht.

11. Lichtstellpult nach einem der Ansprüche 1 bis 6,
**dadurch gekennzeichnet,**
**dass** der Multiplikationsfaktor dem Zehnfachen der Anzahl der am Drehknopf anliegenden Finger (12, 13, 14, 15) minus zehn entspricht.

12. Lichtstellpult nach einem der Ansprüche 1 bis 6,
**dadurch gekennzeichnet,**
**dass** der Multiplikationsfaktor dem Hundertfachen der Anzahl der am Drehknopf anliegenden Finger (12, 13, 14, 15) minus hundert entspricht.
